(19) Europäisches Patentamt
European Patent Office
Office européen des brevets

(11) **EP 1 358 299 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.02.2018 Patentblatt 2018/08**

(45) Hinweis auf die Patenterteilung:
**02.04.2014 Patentblatt 2014/14**

(21) Anmeldenummer: **01902229.2**

(22) Anmeldetag: **09.02.2001**

(51) Int Cl.:
*C09K 17/40* (2006.01)          *C04B 28/02* (2006.01)
*E04D 11/00* (2006.01)          *C04B 18/12* (2006.01)

(86) Internationale Anmeldenummer:
**PCT/CH2001/000089**

(87) Internationale Veröffentlichungsnummer:
**WO 2002/064702 (22.08.2002 Gazette 2002/34)**

(54) **VERFAHREN ZUR HERSTELLUNG VON BÖDEN ODER TRENNSCHICHTEN**

METHOD FOR THE PRODUCTION FLOORS OR PARTING LAYERS

PROCEDE DE PRODUCTION DES SOLS OU COUCHES SEPARATRICES

(84) Benannte Vertragsstaaten:
**AT BE CH CY DE DK ES FI FR GB GR IE IT LI LU MC NL PT SE TR**

(43) Veröffentlichungstag der Anmeldung:
**05.11.2003 Patentblatt 2003/45**

(73) Patentinhaber:
  • **Bossard, Guido**
    **4436 Oberdorf (CH)**
  • **Rosenmund, Raoul**
    **4410 Liestal (CH)**
  • **Ruggli, Markus**
    **4415 Lausen (CH)**

(72) Erfinder:
  • **BOSSARD, Guido**
    **CH-4436 Oberdorf (CH)**
  • **ROSENMUND, Raoul**
    **CH-4410 Liestal (CH)**
  • **RUGGLI, Markus**
    **CH-4415 Lausen (CH)**
  • **SÜTTERLIN, Alfons**
    **79415 Bad Bellingen (DE)**

(74) Vertreter: **Leimgruber, Fabian Alfred Rupert**
**ThomannFischer**
**Elisabethenstrasse 30**
**4010 Basel (CH)**

(56) Entgegenhaltungen:
EP-A- 0 397 963     EP-A- 0 860 493
DE-A- 1 816 704     DE-A- 19 603 805
DE-C- 4 210 224     GB-A- 1 160 569
US-A- 4 259 121

• **DATABASE WPI Section Ch, Week 199942 Derwent Publications Ltd., London, GB; Class L02, AN 1999-496498 XP002180942 & JP 11 092205 A (HAZAMA GUMI LTD), 6. April 1999 (1999-04-06)**
• **ROHRBACH R.: 'Ein Ölschiefer-Werk entsteht', 1987, OTTODRUCK, OBERNDORF Seiten 68 - 77**
• **Technisches Merkblatt, "Doroflow R", August 1996**
• **Europäische Norm EN 196 "Prüfverfahren für Zement", 1989**
• **DIN 1164, Teil 4, November 1978**
• **DIN 1164, Teil 100, Januar 1989**
• **DIN 18 506, Juli 1983**
• **EICKSCHEN E. ET AL: 'Drain-HGT als wasserdurchlässige Tragschicht im Verkehrswegebau' DRAIN-HGT/TECHNOLOGISCHE UNTERSUCHUNGEN April 1994, Seiten 193 - 199**
• **BIRMANN D.: 'Drain-HGT als wasserdurchlässige Tragschicht im Verkehrswegebau' DRAIN-HGT/BAU UND BEWERTUNG April 1994, Seiten 200 - 209**
• **DRINKGERN G.: 'Dränbeton; Aufbau, Eigenschaften und Anwendung', 1988, BETON-VERLAG, DÜSSELDORF Seiten 7 - 56**
• **KRAUSE ET AL: 'Merkblatt für wasserdurchlässige Befestigungen von Verkehrsflächen', 1998, FORSCHUNGSGESELLSCHAF FÜR STRASSEN-UND VERKEHRSWESEN E.V., KÖLN Seiten 2 - 33**

EP 1 358 299 B2

**Beschreibung**

Die vorliegende Erfindung betrifft ein Verfahren gemäss Anspruch 1 Insbesondere betrifft die Erfindung einen wasserdurchlässigen, druckresistenten Bodenbelag.

Weltweit werden zur Zeit für Aussenbau wie auch im Gebäudebau immer höhere Anforderungen an die Eigenschaften von Böden und Wänden gestellt. Dabei spielen nicht nur technische Eigenschaften wie Druckfestigkeit, Wasserdurchlässigkeit, Homogenität, Beständigkeit gegen Umwelteinflüsse wie Wasserbeständigkeit oder Temperaturbeständigkeit etc. eine Rolle. Gleichermassen werden in erhöhtem Mass auch Umweltaspekte wie Giftigkeit, Entsorgbarkeit, Strahlenbelastung etc. und/oder ästhetische Aspekte wie z.B. Oberflächenstruktur, Färbbarkeit etc. wichtig. Bei der Herstellung der Böden ist die Stabilisierung der verwendeten Materialien, d.h. die Bodenstabilisierung, einer der entscheidenden Faktoren. Stabilisierung von Böden bedeutet, dass Böden, mineralische Baustoffe und weitere geeignete Materialien derart mit Bindemittel behandelt werden, dass eine vordefinierte Festigkeit und Volumenbeständigkeit erreicht und erhalten werden kann. Bei der Bodenstabilisierung sind die genannten bodenmechanischen Eigenschaften zu beachten, damit sie z.B. einer voraussichtlichen Beanspruchung durch Verkehr, klimatischen und/oder hydrologischen Einflüssen dauerhaft standhalten können. Bodenstabilisierungen können basierend auf der Norm SN 640 500 a (Schweizer Norm) in Stabilisierungen mit Weisskalk, Stabilisierungen mit hydraulischen Bindemitteln (Zement und hydraulische Kalke), Stabilisierungen mit bituminösen Bindemitteln und mechanische Stabilisierungen unterschieden werden. Unter mechanischer Stabilisierung ist beispielsweise die Veränderung der Korngrössenverteilung des Bodens (z.B. durch Brechen oder Zusammenmischen von verschiedenen Böden), das Entziehen von Wasser (z.B. durch Belüften) und das Verdichten des Bodens (z.B. Oberflächen- oder Tiefenverdichtung) zu verstehen, was die Bodeneigenschaften verbessert. Im Stand der Technik können im allgemeinen folgende Böden mit den entsprechenden Bindemitteln stabilisiert werden: 1) Mit Weisskalk: tonige Kiese, tonige Sande, tonige Silte sowie Tone der Klassen (USCS: U.S. Costums Service) GC-CL, SC-CL, CL, CH (siehe SNV: Schweizerische Normvereinigung). Der Plastizitätsindex sollte grösser ungefähr 8 % sein. Die Stabilisierung kann nur im Ortsmischverfahren durchgeführt werden; 2) Mit hydraulischen Bindemitteln: saubere, siltige, siltig bis tonige und tonige Kiese oder Sande, Silte sowie tonige Silte der Klassen GW, GP, SW, SP, GM, GC, SM, SC, GM-ML, GM-GC, GC-CL, SM-ML, SM-SC, SC-CL, ML und CL (siehe SNV) bis zu einem Plastizitätsindex von etwa 20 %. Böden bis zu einem Plastizitätsindex von etwa 8 %, sowie solche mit einem Anteil kleiner als 0,06 mm bis etwa 35 % können im Zentralmischverfahren aufbereitet werden; 3) Mit bituminösen Bindemitteln: saubere, siltige und siltig bis tonige Kiese oder Sande sowie tonige Kiese oder Sande bis zu einem Plastizitätsindex von etwa 7 % der Klassen GW, GP, SW, SP, GM, GC, SM, SC, GM-ML, GM-GC, SM-ML und SM-SC (siehe SNV). Böden bis etwa 35 % Anteil und einer Korngrösse kleiner als 0,06 mm können noch im Zentralmischverfahren aufbereitet werden. Bereits hier sei darauf hingewiesen (vergleiche insbesondere SN 640 500 a p.3), dass bei allen Stabilisierungsverfahren des Standes der Technik organische Bestandteile in den Böden die Wirkung der oben genannten Bindemittel beeinträchtigen können.

In der USA wurden bereits vor mehr als 60 Jahren Zementstabilisierungen durchgeführt. In der Schweiz wurde damit in den 50-er Jahren begonnen. Heute ist die Bodenstabilisierung ein Verfahren, das an vielen Orten den Ersatz von vorhandenem Boden durch kostbaren Kiessand überflüssig macht. Ausgenommen vom Kiessand, welcher mit Zement stabilisiert werden kann, sind die reinen Silte oder siltigen Sande, die besser mit Zement-Weisskalk stabilisiert werden. Wenn der Tonanteil eines Bodens 10 % übersteigt, ist die Weisskalkstabilisierung einer Zementstabilisierung vorzuziehen. Stabilisierungen mit Zement werden sowohl im Ober- als auch im Unter- und übrigen Erdbau angewendet, besonders wenn starke Beanspruchungen der aufgebauten Schichten erwartet werden. Ein Nachteil der nach dem Stand der Technik bekannten Stabilisierungen ist, dass die verwendeten Böden innerhalb eines bestimmten Korngrössenverteilungsbereichs (siehe SN 670 120 b) liegen müssen, um die Anforderungen an Festigkeit und Wasserdurchlässigkeit zu erreichen. Sieblinien ausserhalb der Norm lassen sich mit dem Stand der Technik nur schwer oder gar nicht stabilisieren. Ausserdem zeigen die bekannten Stabilisierungen eine starke Neigung zur Rissanfälligkeit. Im Stand der Technik war es ferner bis jetzt nicht möglich, hochporöse, wasserdurchlässige Stabilisierungen mit Zement oder Kalk herzustellen, falls der Kies keinen Feinanteil an Sand aufweist und/oder der Kies nur aus Kies einer bestimmten Korngrösse (d.h. aus einem engen Korngrössenbereich) besteht, beispielsweise Kies von 4 bis 8 mm oder 8 bis 16 mm. Der Stand der Technik hat ferner den Nachteil, dass sich immer nur Böden mit einer Korngrössenverteilung stabilisieren lassen. Böden, die beispielsweise eine ganz bestimmte, diskrete Korngrösse aufweisen, lassen sich kaum oder nicht stabilisieren. Wie schon erwähnt, weist der Stand der Technik ebenfalls den Nachteil auf, dass organische Bestandteile oder Verunreinigungen in den Böden die Wirkung der Bindemittel beeinträchtigen können.

Im Albvorland kann Ölschiefer des Lias epsilon auf etwa 150 Kilometer Länge mit einer mittleren Mächtigkeit von etwa 10 m über Tage abgebaut werden. Wegen der häufigen Funde der Muschel Posidonomya Bronni bezeichnet man ihn auch als Posidonienschiefer. Der Name "Ölschiefer" ist eigentlich irreführend, da zum einen diese Sedimente keine Schiefer im geologischen Sinne sind, noch enthalten sie Öl. Ihr organischer Inhalt besteht vielmehr zu 80 bis 90 % aus Kerogenen (Bitumen: griech. "das Brennbare), welche in langen Zeiträumen aus organischen Bestandteilen entstehen. Bei den Bitumen handelt es sich um kompliziert aufgebaute, hochpolymere Substanzen, die in organischen Lösungsmitteln und Mineralsäuren unlöslich sind. Erst durch Erhitzen entstehen aus diesen makromolekularen Stoffen (den Kerogenen) niedermolekulare Verbindungen, die dann erdölartige Eigenschaften zeigen. Das Posidonienschiefergestein oder Ölschiefer ist durch den Bitumengehalt, Feinschichtung und millimeterdicke Lagen voller submikroskopischer Kalkplättchen planktonischer Algen gekennzeichnet. Ölschiefergesteine gehen allgemein aus schlammigen Sedimenten hervor, die reich an organischem Material sind. Ihre Verfestigung läuft bei niedrigen Temperaturen und unter dem Druck überlagemder Schichten ab. Bei der Zersetzung von organischem Material entstehen weiter Kohlenstoff- und Schwefelverbindungen. Daraus bildet sich im sauerstoffarmen Bodenschlamm Hydrogencarbonat $(HCO_3^-)$ und Schwefelwasserstoff ($H_2S$). Bei der Zersetzung toter Tiere entsteht ebenso Ammoniak ($NH_3$). Dies führt zu einer Erhöhung des pH-Wertes und bewirkt, dass der im Bodenschlamm als Calcium-Hydrogencarbonat ( $Ca_2^+$ und $HCO_3^-$ ) gelöste Kalk im Ölschiefer teilweise abgeschieden ist. Der Ölschiefer gehört zur Juraformation und dort in den Lias oder Schwarzen Jura. Sein Abbau und seine Nutzung haben eine lange Geschichte. Die Verwendung von Ölschiefer ist in diversen Gebieten im Stand der Technik bekannt. Z.B. sind zur Treibstoffgewinnung (Öl) verschiedene Verfahren zur Schwelung des Ölschiefers bekannt. Beispiele zur Verwendung des Schachtofenprinzips zur Schwelung zeigen US373647 oder DE2243389. Bei fein zerkleinertem Gut ist das Schachtofenprinzip nicht mehr anwendbar. Andere Verfahren mit Feinguteinsatz wie z.B. US3844930 arbeiten mit Feststoffen als Wärmeträger. Aus DE2728204 oder DE2728455 ist ebenfalls die Pyrolyse, d.h. die Zersetzung von festen oder flüssigen Stoffen bei hohen Temperaturen (400 bis 700 Grad C) unter Sauerstoffausschluss, von kohlenstoffhaltigem Material, insbesondere von Ölschiefer, in einem Zyklotron-Reaktor oder Schwelzyklotron-Reaktor bekannt. Bei allen Verfahren kann je nach Wasserstoffgehalt des Ölschiefers ein mehr oder weniger grosser Anteil der organischen Substanz gewonnen werden, ein Teil verbleibt stets als Restkohlenstoff auf dem Schiefer zurück. Dieser Rückstand wird als gebrannter Ölschiefer bezeichnet. Eine typische Ausbeute für beispielsweise ein Ölschiefer mit 10,3 Gew.% organischem Kohlenstoff ist: Feuchtigkeit (bis 105°C) 1,0 Gew.%, Schwelwasser 1,9 Gew.%, Öl 5,4 Gew.%, Gas und Verluste 3,4 Gew.% und Rückstand 88,3 Gew.%. Für die Rückstände, d.h. für den gebrannten Ölschiefer, sind im Stand der Technik nicht viele Verwendungszwecke bekannt. Eine weitere Anwendung aus dem Stand der Technik (DE19603805) ist es, den gebrannten zur Herstellung von mineralischen hüttensandfreien Dichtwandmassen bzw. Bindemittelmischungen zu verwenden. Eine solche Bindemittelmischung weist gebrannten Ölschiefer, Zement-Klinker und Ligninsulfonat auf. Ein anderes Beispiel einer Verwendung von gebranntem Ölschiefer zeigt DE198753196. Darin wird gebrannter Ölschiefer zur Herstellung schwindungsarmer Bindemittel, d.h. von hydraulischen Bindemitteln mit reduzierter Schwindung, benutzt. Diese Bindemittel enthalten mindestens gebrannten Ölschiefer, Zementklinker, Calciumsulfat, Siliciumdioxid, Alkalisulfat und Fliessmittel. In dieser Patentschrift geht es vor allem darum, durch die schwindungsarme bzw. leicht quellende Erhärtungseigenschaft des vorgestellten Bindemittels Schwindrissbildung zu reduzieren oder ganz zu verhindern. Insbesondere wird das Bindemittel nur in Verbindung mit Calciumsulfat, Siliciumdioxid, Alkalisulfat und Fliesmittel verwendet. Es ist darauf hinzuweisen, dass gebrannter Ölschiefer beispielsweise auch in der DIN 1164 (Deutsches Institut für Normung: Neue Zementnorm) gefunden werden kann. Die DIN 1164 erwähnt CEM II/ A-T und B-T Portland-Ölschiefer-Zemente mit Anteilen von gebranntem Ölschiefer von 6 bis 20 % für A-T und 21 bis 35 % für B-T.

Aus DE 1 816 704 ist eine flexible Tragschicht für Fahrbahndecken mit einem ölschiefer-haltigen Bendemittel bekannt.

Die Aufgabe der vorliegenden Erfindung besteht darin, ein neues und besseres Verfahren zur Herstellung von wasserdurchlässigen Boden oder Trennschichten vorzuschlagen.

Gemäss der vorliegenden Erfindung werden diese Ziele insbesondere durch die Elemente des unabhängigen Anspruchs 1 erreicht. Weitere vorteilhafte Ausführungsformen gehen ausserdem aus den abhängigen Ansprüchen und der Beschreibung hervor.

Insbesondere werden diese Ziele durch die Erfindung durch ein Bindemittel zur Stabilisierung von Böden, Wänden oder Trennschichten erreicht, wobei das zu bindende Material, welches zusammen mit dem Bindemittel den Boden, die Wand oder die Trennschicht bildet, Material mit toniger, siltiger, sandiger, kiesiger und/oder steiniger Korngrösse umfasst, wobei das Bindemittel gebrannter Ölschiefer z.B. nach DIN 1164 umfasst und wobei das Bindemittel ein oder mehrere Zemente nach DIN 1164 umfasst. Ein Vorteil ist, dass das Bindemittel und insbesondere damit hergestellte bzw. stabilisierte Bodenbeläge durch die organische Basis der Substanzen sich auch für Orte mit hohen Anforderungen an die Unbedenklichkeit bezüglich Giftigkeit der verwendeten Materialien eignet. Dies kann an Orten wichtig sein, die z.B. zur Lagerung oder Herstellung von Nahrungsmitteln etc. (Lagerhallen, Weinkeller, Pflanzenzuchten, Treibhäusern etc.) bestimmt sind, oder an Orten mit geschlossenen und/oder schlecht belüfteten Räumen, in welchen Menschen, im speziellen Kinder und/oder ältere Personen und/oder Tiere sich längere Zeit aufhalten.

In einer Ausführungsvariante werden Böden oder Trennschichten mit einem Bindemittel gemäss der vorhergehenden Ausführungsvariante stabilisiert, welches Bindemittel ein Zusatzmittel umfasst, welches Zusatzmittel eine Mischung aus einem oder mehreren der Stoffe Betonverflüssiger (BV), Fliesmittel (BV), Stabilisierer (ST), Erstarrungsverzögerer (VZ), Einpresshilfen (EH), Luftporenbildner (LP), Betondichtungsmittel (DM), Entschäumer (ES), Flugasche (FA), Puzzolane (PL) und/oder Dispersionen (DS) umfasst. Diese Ausführungsvariante hat den Vorteil, dass das Bindemittel verschiedenen Anwendungsbereichen und Herstellungsverfahren der Böden oder Trennschichten ideal angepasst werden kann. So können mit dem Zusatzmittel z.B. Bedingungen der Orts- und Zentralmischverfahren, Druckund Elastizitätsanforderungen etc. oder Anforderungen an das Bindemittel wie z.B. Viskosität, Oberflächenspannung, Aushärtgeschwindigkeit etc. berücksichtigt werden.

Das Bindemittel umfasst 2 bis 90 Gew.% gebrannte Ölschiefer, 2 bis 90 Gew.% aus den ein oder mehreren Zementen und 0,1 bis 10 Gew.% aus Zusatzmittel des Bindemittels. Diese Ausführungsvariante hat den Vorteil, dass es den Anforderungen an das Bindemittel in besonderem Masse entspricht und eine der vorzugsweisen Zusammensetzungen bildet. Weiter können mit solcher Zusammensetzung die Anforderungen an z.B. Druckfestigkeit, Erosionssicherheit, Elastizität der Böden, oder Trennschichten optimal erreicht werden, wobei je nach Anwendungsfall und Bodenbeschaffenheit die Zusammensetzung variiert werden kann. Weitere Vorteile ergeben sich aus der Beschreibung und den Ausführungsbeispielen.

In einer Ausführungsvariante beträgt der Anteil an gebranntem Ölschiefer 25 bis 50 Gew.% des Bindemittels. Diese Ausführungsvariante hat die gleichen Vorteile wie die vorhergehende Ausführungsvariante.

In einer Ausführungsvariante beträgt der Anteil an den ein oder mehreren Zementen 50 bis 75 Gew.% des Bindemittels. Diese Ausführungsvariante hat die gleichen Vorteile wie die vorhergehende Ausführungsvariante.

In einer Ausführungsvariante beträgt der Anteil an Zusatzmitteln 0,2 bis 2 Gew.% des Bindemittels. Diese Ausführungsvariante hat die gleichen Vorteile wie die vorhergehende Ausführungsvariante.

In einer anderen Ausführungsvariante umfassen die ein oder mehreren Zemente Portlandzement und/oder Trasszement und/oder Lavazement und/oder Schnellzement und/oder Tonerdenzement und/oder Eisenportlandzement und/oder Hochofenzement und/oder Trasshochofenzement. Dies hat insbesondere den Vorteil, dass es sich bei diesen Zementen um die gängigen Zemente der Norm DIN 1164 handelt, welche entsprechend der Norm leicht erhältlich und preisgünstig sind und deren Verwendung im Bausektor gängig ist.

In einer wieder anderen Ausführungsvariante umfasst das Bindemittel zusätzlich latent-hydraulische Stoffe, wobei der Anteil an gebranntem Ölschiefer mindestens teilweise durch diese latent hydraulischen Stoffe ersetzt wird. Dies hat den Vorteil, dass der Anteil an Ölschiefer, beispielsweise falls er nur schwer erhältlich und/oder teuer ist, reduziert werden kann.

In einer Ausführungsvariante umfasst das Bindemittel zusätzlich Kalkstein und/oder Kalkmergel und/oder andere Gesteinsmehle, wobei der Anteil an gebranntem Ölschiefer mindestens teilweise durch diese Gesteinsmehle ersetzt wird. Dies hat wie die vorhergehende Ausführungsvariante den Vorteil, dass der Anteil an Ölschiefer, beispielsweise falls er nur schwer erhältlich und/oder teuer ist, reduziert werden kann.

In einer Ausführungsvariante werden bei der Herstellung des Bindemittels entsprechend einer der vorhergehenden Ausführungsvarianten der gebrannte Ölschiefer und die ein oder mehreren Zemente getrennt vermahlen, z.B. auf eine Mahlfeinheit gemäss DIN EN 196-6 nach dem Luftdurchlässigkeitsverfahren (Blaine) und beide Komponenten zusammen mit dem Zusatzmittel in einer entsprechenden Bindemittelmischanlage trocken homogen miteinander vermischt. Einer der Vorteile dieser Ausführungsvariante ist, dass damit die Mahlfeinheit des gebrannten Ölschiefers und die ein oder mehreren Zemente zueinander variiert werden kann.

Der Ölschiefer auf eine Mahlfeinheit von 6000 bis 10000 $cm^2/g$ und der Zement auf eine Mahlfeinheit von 2700 $cm^2/g$ bis 4500 $cm^2/g$ vermahlen. Einer der Vorteile ist, dass mit der Mahlfeinheit Korngrösse und Oberflächenbeschaffenheit der Körner des zu bindenden Materials berücksichtigt werden können, d.h. durch die grössere spezifische Oberfläche (als bei den herkömmlichen Bindemittel) können Körner mit sehr kleiner Kontaktfläche gebunden werden. Insbesondere Körner mit Komgrössen in einem sehr engen Bereich. Dies ist mit den herkömmlichen Methoden nicht möglich. Da damit Material mit grossem Korn und sehr kleiner Komgrössenvarianz gebunden werden kann, kann z.B. eine sehr gute Wasserdurchlässigkeit erreicht werden. Ein anderer Vorteil ist, dass sich durch die grosse spezifische Oberfläche des Bindemittels die Böden und/oder Trennschichten besser und homogener einfärben lassen. D.h. dass das Bindemittel kolloidaler ist als Bindemittel herkömmlicher Methoden. Zusätzlich lassen sich beim Einfärben auch organische Farbstoffe verwenden, ohne dass die Eigenschaften des Bindemittels verändert würden. Dies steht in klarem Gegensatz zum Stand der Technik und gehört u.a. zu den wichtigen Vorteilen der Erfindung.

In einer anderen Ausführungsvariante für ein Verfahren zur Herstellung des Bindemittels nach der letztgenannten Ausführungsvarianten wird der Ölschiefer auf eine Mahlfeinheit von über oder gleich 10000 $cm^2/g$ vermahlen. Diese Ausführungsvariante hat u.a. die gleichen Vorteile wie die letztgenannte Ausführungsvariante.

In wieder einer anderen Ausführungsvariante für ein Verfahren zur Herstellung des Bindemittels nach einer der obigen Ausführungsvarianten werden die ein oder mehreren Zemente auf eine Mahlfeinheit von über oder gleich 4000 cm$^2$/g vermahlen. Diese Ausführungsvariante hat u.a. die gleichen Vorteile wie die letzt- und vorletztgenannte Ausführungsvariante.

In einer Ausführungsvariante zur Herstellung des Bindemittels entsprechend einer der obigen Ausführungsvarianten werden der gebrannte Ölschiefer und die ein oder mehreren Zemente gemeinsam vermahlen und beide Komponenten zusammen mit dem Zusatzmittel in einer entsprechenden Bindemittelmischanlage trocken homogen miteinander vermischt.

In einer Ausführungsvariante mit einem Bindemittel entsprechend einer der obigen Ausführungsvarianten dient die Bodenschicht als Fundations- und/oder als Tragschicht und/oder einer in Norm SN 640 302 a aufgeführten Schicht zur Verwendung im Strassenbau oder bei Planierungen aller Art. Diese hydraulisch gebundenen Tragschichten haben u.a. den Vorteil, dass sie beispielsweise Arbeitsplattformen, Strassenbeläge und dergleichen bilden können, welche insbesondere Baumbestände oder andere Pflanzenvorkommen in diesem Bereich vorweisen, da bei geeignetem erfindungsgemässem Boden eine genügend grosse Wasserdurchlässigkeit gewählt werden kann, dass die Wasseraufnahme für die Pflanzen garantiert ist und gleichzeitig das Wurzelwerk vor dem Zusammendrücken geschützt ist.

In einer Ausführungsvariante mit einem Bindemittel entsprechend einer der obigen Ausführungsvarianten dient die Bodenschicht als lastenverteilende Schicht auf setzungsempfindlichen Böden.

In einer Ausführungsvariante mit einem Bindemittel entsprechend einer der obigen Ausführungsvarianten dient die Bodenschicht zum Schutz vor witterungsempfindlichen Oberflächen.

In einer Ausführungsvariante mit einem Bindemittel entsprechend einer der obigen Ausführungsvarianten ist bei der Trennschicht die Körnigkeit des mit dem Bindemittel stabilisierten Materials gross, die Wasserdurchlässigkeit ebenfalls und die Trennschicht bildet Teile eines Drainage- oder Entwässerungssystems. Einer der Vorteile dieser Ausführungsvariante ist, dass bei der erfindungsgemässen Trennschicht, welche durch die Art des verwendeten Baugrundes, insbesondere der Anordnung verschiedener Schichten, eine bestimmte Wasserdurchlässigkeit oder Membranwirkung erreicht werden kann, wodurch der hydrostatische Druck von Böden leicht auf das gewünschte Niveau gebracht werden kann und/oder der Wasserspiegel auf eine bestimmte Höhe gesenkt werden kann.

In einer Ausführungsvariante umfassen der Boden oder die Trennschicht mindestens zwei Schichten verschiedener in sich homogener Körnigkeiten. Diese Ausführungsform hat u.a. den Vorteil, dass damit verschiedene Filterwirkungen erzielt werden können. Insbesondere lassen sich damit auch ästhetische Anforderungen leicht erfüllen, falls die Körnigkeit der äusseren Schicht nicht dem Anforderungsprofil an den Boden oder die Trennschicht genügt.

In einer Ausführungsvariante wird zu bindendes Material mit einem Bindemittel gemäss einer der vorhergehenden Ausführungsvarianten stabilisiert, wobei vorgefertigte Bau- und/oder Formelemente mittels vordefinierten Schalungen und/oder Formmasken hergestellt werden. Ein Vorteil dieser Ausführungsvariante ist, dass die vorgefertigten Bau- und/oder Formelemente beispielsweise zentral hergestellt werden können und dann in den veschiedensten Bereichen des Bau- und Gartenbaus eingesetzt werden können.

In einer Ausführungsvariante wird der Boden, oder die Trennschicht unter Verwendung eines erfindungsgemässen Bindemittels stabilisiert, wobei das zu bindende Material mindestens teilweise aus organischem Material besteht. Einer der Vorteile dieser Ausführungsvariante ist, dass durch die entsprechende Wahl des zu bindenden Materials spezielle Eigenschaften wie Gewicht, Feuerbeständigkeit, Wasserdurchlässigkeit, Wasserspeicherfähigkeit etc. für spezielle Anwendungen oder Konstruktionen, wie z.B. Flachdächer, Dachgärten, Leichtkonstruktionen etc., berücksichtigt werden kann. Für solche Anwendungen kann es z.B. sinnvoll sein, das zu bindende Material aus Kunstoff oder ähnlichem herzustellen.

Nachfolgend wird eine Ausführung der vorliegenden Erfindung anhand eines Beispiels beschrieben. Das Beispiel wird durch die beigelegten Figuren illustriert.

Figur 1 zeigt eine Karte der Gebiete mit Ölschiefervorkommen in West- und Zentraleuropa (Landverteilung während des Lias ε).

Figur 2 zeigt die mit dem Stand der Technik möglichen Korngrössenverteilungsbereiche für Stabilisierungen mit Weisskalk gemäss SN 640500 a.

Figur 3 zeigt die mit dem Stand der Technik möglichen Korngrössenverteilungsbereiche für Stabilisierungen mit hydraulischen Bindemitteln gemäss SN 640500 a.

Figur 4 zeigt die mit dem Stand der Technik möglichen Korngrössenverteilungsbereiche für Stabilisierungen mit bituminösen Bindemitteln gemäss SN 640500 a.

Figur 5 zeigt die Korngrössenverteilungsbereiche für Stabilisierungen mit einem Bindemittel.

Figur 6 zeigt ein Stück Bodenschicht, welche mit einem Bindemittel stabilisert wurde.

Figur 7 zeigt eine Bodenschicht, welche mit einem Bindemittel stabilisiert wurde, in Vergrösserung. Die Pfeile weisen auf Kontaktstellen des Kieses hin, welche durch das Bindemittel gebunden werden.

Figur 8 zeigt ein Stück Bodenschicht, welche mit einem Bindemittel stabilisiert wurde. Insbesondere zeigt es die Möglichkeit, eine saubere Grenzschicht für die Böden oder Trennschichten zu bilden.

Figur9 zeigtdie Druckfestigkeitvon gebundenen Böden für verschiedene Bindemittel in Abhängigkeit der Zeit, wobei die verschiedenen Bindemittel keinen gebrannten Ölschiefer umfassen, d.h. also für Bindemittel gemäss dem Stand der Technik.

Figur 10 zeigt die Druckfestigkeit von gebundenen Böden in Abhängigkeit für verschiedene Bindemittel, in Abhängigkeit der Zeit und in Abhängigkeit ihrer Anteile gebrannten Ölschiefers.

Figur 11 zeigt die Druckfestigkeit von gebundenen Böden in Abhängigkeit für verschiedene Bindemittel, in Abhängigkeit der Zeit und in Abhängigkeit ihrer Anteile gebrannten Ölschiefers, wobei die Bindemittel zusätzlich 1 Gew.% Verzögerer umfassen.

Figur 12 zeigt die Druckfestigkeit von gebundenen Böden in Abhängigkeit für verschiedene Bindemittel, in Abhängigkeit der Zeit und in Abhängigkeit ihrer Anteile gebrannten Ölschiefers, wobei die Bindemittel zusätzlich 1 Gew.% Verflüssiger umfassen.

Figur 13 zeigt die Druckfestigkeit von gebundenen Böden in Abhängigkeit für verschiedene Bindemittel, in Abhängigkeit der Zeit und in Abhängigkeit ihrer Anteile gebrannten Ölschiefers, wobei die Bindemittel zusätzlich 1 Gew.% Polymerdispersion umfassen.

Figur 14 zeigt die Druckfestigkeit von gebundenen Böden in Abhängigkeit für ein Bindemittel, in Abhängigkeit der Zeit. Der Anteil an gebrannten Ölschiefer beträgt 20 % und der Anteil an Portlandzement 78 %, wobei das Bindemittel zusätzlich 1 Gew.% Verflüssiger und 1 Gew.% Polymerdispersion umfasst.

Figur 15 zeigt die Integration von Bäumen bei Strassen oder Trottoirs gemäss dem Stand der Technik.

Figur 16 zeigt die Integration von Bäumen bei Strassen oder Trottoirs unter Verwendung eines erfindungsgemässen Bodenbelags.

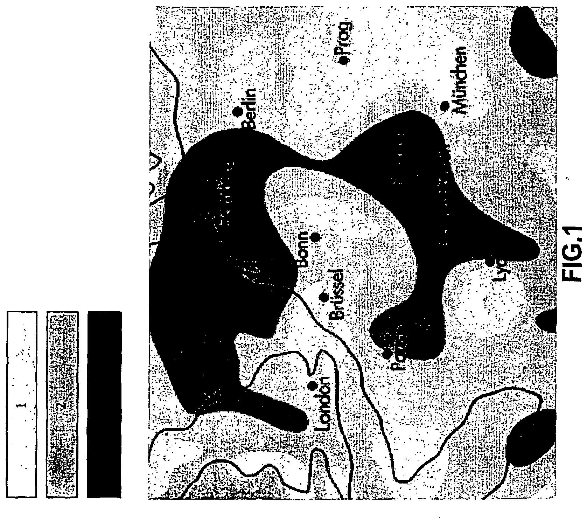

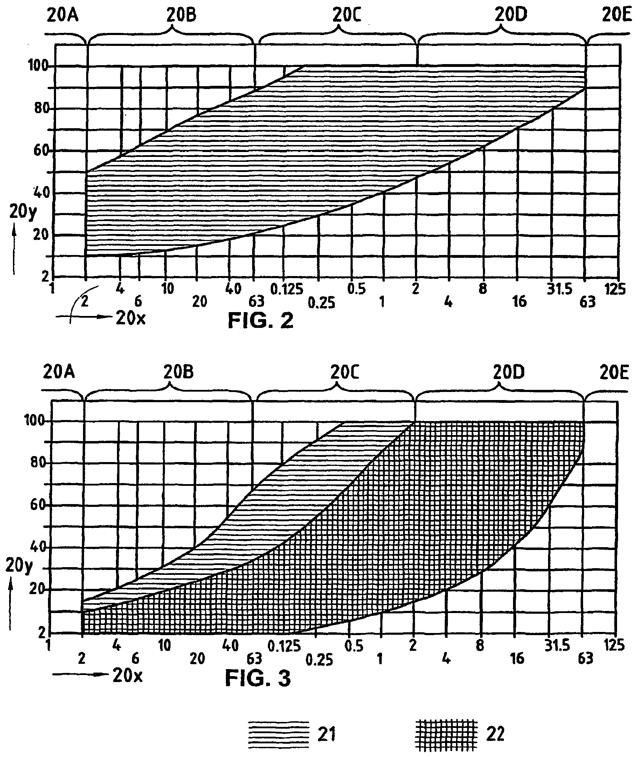

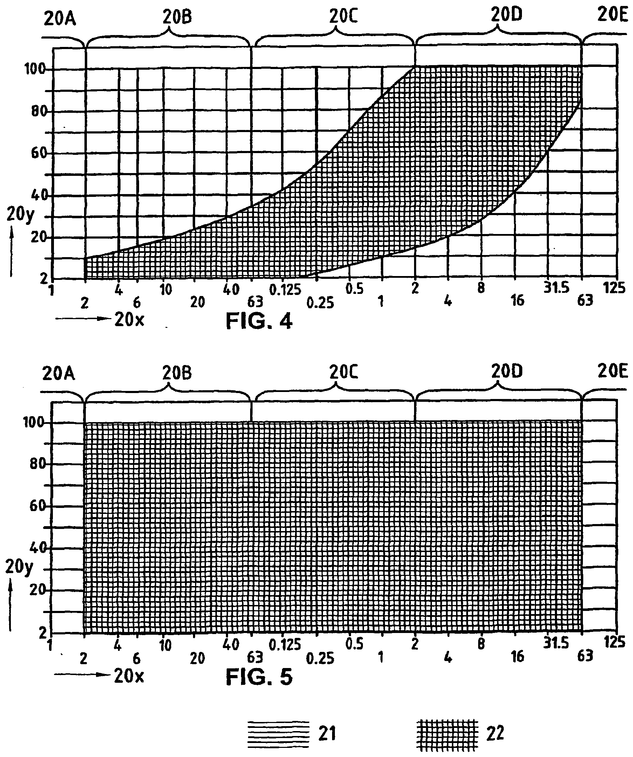

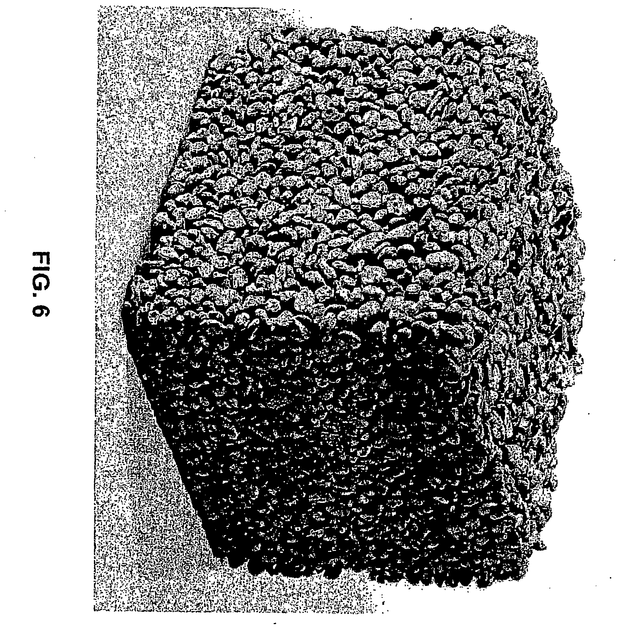

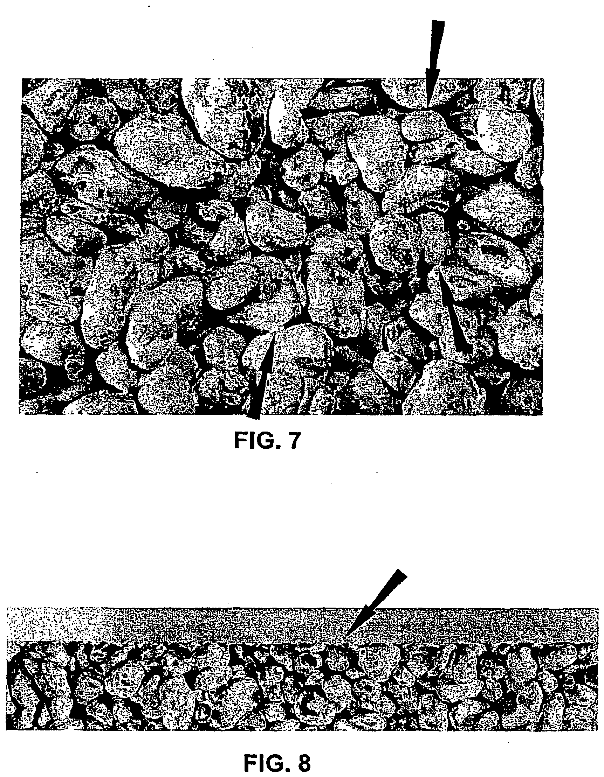

Im einem Ausführungsbeispiel wird zur Stabilisierung der Böden und/oder Trennschichten ein Bindemittel wie in Anspruch 1 definiert verwendet, welches mindestens teilweise aus gebranntem Ölschiefer besteht. Das Bindemittel umfasst neben dem gebrannten Ölschiefer (z.B. gebrannter Ölschiefer nach DIN 1164), ein oder mehrere Zemente. Die Zemente können Portlandzement, Trasszement, Lavazement, Schnellzement, Tonerdezement, Eisenportlandzement, Hochofenzement (Hochofenschlacke, Flugasche) oder Trasshochofenzement umfassen, z.B. ebenfalls nach DIN 1164. Die ein oder mehreren Zementeklinker besitzen eine praxisübliche Klinkerphasenzusammensetzung ($SiO_2/Al_2O_3$), z.B. gemäss "VDZ-Zement-Taschenbuch 1984 (Bauverlag)". Die Mahlfeinheit der Zemente beträgt zwischen 2700 und 4500 cm$^2$/g nach Blaine (Luftdurchlässigkeitsverfahren). Bei dem hier beschriebenen Bindemittel wurde in einem Ausführungsbeispiel eine Mahlfeinheit von ungefähr 4000 cm$^2$/g nach Blaine verwendet, aber auch andere Mahlfeinheiten sind möglich. Bei dem Material, welches mit dem Bindemittel gebunden wird und zusammen mit den Bindemittel den Boden und/oder Trennschicht bildet, handelt es sich um Kies. Der Baugrund in seinem natürlichen Zustand kann z.B. den Normen der Schweizerischen Normenvereinigung entnommen werden. Baugrund aus Ton, Silt, Sand und Kies wird z.B. in die folgenden Klassen gemäss USCS mit ihren entsprechenden Richtwerten gemäss Schweizerischer Normenvereinigung (SNV) unterteilt: Für Kies in GW, GP, GM, GC, GM-ML, GM-GC, GC-CL und GC-CH, für Sand in SW, SP, SM, SC, SM-ML, SM-SC, SC-CL und SC-CH und für Silt und Ton in ML, CL-ML, CL, CH, OL, OH und MH. Das zu bindende Material muss nicht unbedingt mineralischen Ursprungs sein, sondern kann jede mögliche Zusammensetzung aus organischem und/oder anorganischem Material umfassen. Z.B. sind für Anwendungen, welche besondere Anforderungen an das Gewicht, Feuerfestigkeit, Wasserdurchlässigkeit, Wasserspeicherfähigkeit oder andere Eigenschaften des zubindenden Materials stellen (z.B. bei der Verwendung auf Flachdächern, Dachgärten, Leichtkonstruktionen etc.) zubindende Materialen aus Kunstoff, Lecca-Tonkugeln, Blähton oder ähnlichem vorstellbar. Bei dem Bindemittel der vorliegenden Erfindung handelt es sich nicht um ein organisches Bindemittel, sondern um ein anorganisches Bindemittel mit Restkohlenstoff aus der Verbrennung oder Schwelung des Ölschiefers (d.h. mit einem Kohlenstoffgehalt von i.N. 5-13 Gew.%). Bei dem Bindemittel wurde zumeist eine Mischung aus verschiedenen Ölschiefern verwendet mit einem Kohlenstoffgehalt von 8.5 Gew.%. Natürlich kann aber auch ein Ölschiefer mit anderem Kohlenstoffgehalt verwendet werden, wobei sein Anteil leicht variiert werden muss, um gleiche Eigenschaften des Bindemittels zu erhalten. Wie beschrieben, wird bei der Verbrennung von Ölschiefer das enthaltene Kerogen in Energie umgewandelt. Das zurückbleibende Mineralgemisch, bestehend aus Kalk- und Tonmaterialien mit Resten von Kohlenstoffverbindungen hat hydraulische Eigenschaften, d.h. unter Beigabe von Wasser erhärtet es an der Luft und unter Wasser. Der gebrannte Ölschiefer ist als solcher in der DIN 1164 (neue Zementnorm) aufgeführt. Als Beispiel für einen der verwendeten gebrannten Ölschiefer kann ein bitumenarmer Posidonienschiefer mit einem durchschnittlichen Gehalt an organischer Substanz von 5 bis 13 % angeführt werden. Der Ölschiefer wird nach entsprechender Aufbereitung im Wirbelschichtofen gebrannt und anschliessend fein vermahlen. Vorzugsweise wird der gebrannte Ölschiefer auf eine Mahlfeinheit, bestimmt (vergl. DIN EN 196-6) nach dem Luftdurchlässigkeitsverfahren (Blaine), von 6000 bis 10000 cm$^2$/g gebracht. Andere Mahlfeinheiten sind ebenfalls möglich. Für ein mit dem Verfahren hergestelltes Ausführungsbeispiel wurde für das Bindemittel ein gebrannter Ölschiefer mit einer Mahlfeinheit von 10000 cm$^2$/g verwendet, was etwa doppelt so fein ist wie die verwendete Mahlfeinheit der ein oder mehreren Zemente (jeweils ungefähr 4000 cm$^2$/g). Mit der Mahlfeinheit können insbesondere Korngrösse und Oberflächenbeschaffenheit des zu bindenden Materials berücksichtigt werden, d.h. durch eine grössere spezifische Oberfläche bei grösserer Mahlfeinheit können Körner mit sehr kleiner Kontaktfläche gebunden werden. Beispiele dazu werden in den Figuren 6, 7 und 8 gezeigt. Die Figuren zeigen eine Bodenschicht, welche mit einem Bindemittel stabilisiert wurden. In Figur 7 wird eine solche Bodenschicht in Vergrösserung gezeigt. Die Pfeile weisen auf die weiter oben beschriebenen Kontaktstellen des Kieses hin, welche durch das Bindemittel gebunden werden. Figur 8 zeigt, wie mit den erfindungsgemässen Böden, oder Trennschichten auch eine saubere Grenzschicht gebildet werden kann. Es soll insbesondere darauf hingewiesen werden (Figur 6), dass bei dem gebundenen Material, falls nicht erwünscht, keine Verdichtung des Materials z.B. in Richtung unten stattfindet. Dies ist mit dem Stand der Technik nur schwer zu erreichen. Da mit dem Bindemittel sehr kleine Kontaktflächen gebunden werden können, können insbesondere Komgrössen in einer sehr engen Grössenvarianz gebunden werden. Mit den herkömmlichen Methoden lässt sich solches Material nicht oder nur sehr schwer binden. Da damit Material mit grossem Korn und sehr kleiner Komgrössenvarianz gebunden werden kann, können z.B. auch eine sehr grosse Wasserdurchlässigkeit bzw. eine klar definierte Wasserdurchlässigkeit oder andere speziell geforderte Eigenschaften erreicht werden. Die Figuren 2, 3 und 4 zeigen mögliche Korngrössenverteilungsbereiche für Stabilisierungen gemäss dem Stand der Technik. Figur 5 zeigt dagegen möglichen Komgrössenverteilungsbereiche für Stabilisierungen mit einem Bindemittel oder Verfahren. D.h. die Diagramme geben die möglichen Komgrössenverteilungsbereiche für das zu bindende Material, insbesondere Bodenmaterial wieder. Figur 2 zeigt die mit dem Stand der Technik möglichen Korngrössenverteilungsbereiche für Stabilisierungen mit Weisskalk (siehe SN 640500 a), Figur 3 mit hydraulischen Bindemitteln (siehe SN 640500 a) und Figur 4 mit bituminösen Bindemittel (siehe SN 640500 a). Die einfach schraffierten Flächen 21 zeigen dabei Korngrössenverteilungsbereiche für Stabilisierungen im Ortsmischverfahren und die doppelt schraffierten Flächen 22 Korngrössenverteilungsbereiche für Stabilisierungen im Orts- oder Zentral-mischverfahren. Korngrössenverteilung derweissen Flächen lassen sich durch die angegebenen Bindemittel nicht oder ungenügend stabilisieren. Die X-Achse 20X gibt die verschiedenen Korndurchmesser bzw. Sieböffnungen in mm (Millimeter) wider, während die Y-Achse 20Y den Durchgang in Masse-% angibt. Der Bereich 20A ist der Bereich von Ton, 20B von Silt, 20C von Sand, 20D von Kies und 20E von Steinen. Figur 5 zeigt klar, dass sich im Gegensatz zu den herkömmlichen Stabilisierungsmethoden mit den Bindemitteln Bodenmaterial über der gesamten Korngrössenverteilung stabilisieren lässt, dies sowohl im Orts- als auch im Zentralmischverfahren. Es muss angefügt werden, dass die Bereiche Ton 20A und Steine 20E in den Diagrammen nicht berücksichtigt und deshalb ausgelassen wurden. Ausgehärtet wird das Bindemittel z.B. unter Beigabe von Wasser. Die Aufbereitung des zu bindenden Materials sowie auch die Zugabe von Bindemittel und Wasser kann wie bei der bekannten Zementstabilisierung erfolgen. Dies kann vor Ort, zentral oder z.B. auch an einer Fabrikationsstätte mit vordefinierten (Schalungs)Elementen geschehen. Diese Elemente können dann verfestigt und/oder gebunden vor Ort verwendet werden. Das zu bindende Material kann z.B. durch Stampfen, Schalen, Walzen, Vibrieren und/oder Auffüllen angebracht werden. Ebenfalls, wie bei der Zementstabilisierung bekannt, kann die Zugabe des Bindemittels und des Wassers so erfolgen, dass das Bindemittel auf der zu behandelten Fläche verteilt und mit einer Bodenfräse in das Bodenmaterial eingefräst wird (In Situ Technik). Die Wasserzufuhr erfolgt durch Besprengung. Nach Abschluss der Verdichtung kann zum Schutz gegen zu starkes Austrocknen auch eine Nachbehandlung durch Aufsprühen einer Bitumenemulsion durchgeführt werden. Die In Situ Technik kann sich z.B. besonders bei kontaminierten Böden eignen. Bei einer Behandlung mit dem Bindemittel kann ein kostenintensiver Abtransport und/oder eine Entsorgung des kontaminierten Bodenmaterials entbehrlich werden. Ein anderer Aspekt des Bindemittels ist, dass sich durch die grosse spezifische Oberfläche des Bindemittels (u.a: wegen seiner grossen Mahlfeinheit) die Böden, und/oder Trennschichten besser und homogener einfärben lassen als mit herkömmlichen Methoden, d.h. seine kolloidalen Eigenschaften sind klar besser als jene des Standes der Technik. Zusätzlich lassen sich beim Einfärben auch organische Farbstoffe verwenden, ohne dass die Eigenschaften des Bindemittels verändert würden. Dies steht in klarem Gegensatz zum Stand der Technik. Die chemische Zusammensetzung des gebrannten Ölschiefers ist abhängig von der Geologie der Lagerstätte und dem Brennprozess. Figur 1 zeigt eine Karte der Gebiete mit Ölschiefervorkommen in West- und Zentraleuropa bzw. der Land- und Meerverteilung zur Zeit des Lias ε. Für die Bildung von Ölschiefer braucht es Orte mit sauerstoffarmem, wenig bewegtem Tiefenwasser, da dann die zumeist pflanzlichen und tierischen Planktonorganismen nicht mehr oxidativ abgebaut werden können und unter der Wirkung anaerober Bakterien unvollständig verwesen, wobei das organische Material die Grundlage zur Bildung der Kerogenen (Bitumen) des Ölschiefers liefert. Orte mit der hellsten Einfärbung 1 in Figur 1 zeigen Landvorkommen während des Lias ε. Orte mit der mittleren Einfärbung 2 umfassen gut durchlüftetes Flachmeer und Orte mit der dunkelsten Einfärbung 3 umfassen Meeresbecken mit Ölschieferablagerungen. Wie erwähnt unterschiedet sich der abgebaute Ölschiefer jedoch entsprechend der Geologie dieser Orte (Figur 1). Eine Durchschnittsanalyse weist ungefähr 32 % CaO, 36 % $SiO_2$, 11 % $Al_2O_3$, 10 % $SO_3$, 7 % $Fe_2O_3$ und geringe Mengen von MgO, $K_2O$ und $Na_2O$ auf (Werte glühverlustbehaftet). Der Ölschiefer selbst ist hydraulisch erhärtend und kann teilweise durch latent-hydraulische Stoffe ersetzt werden. Ebenso ist es möglich, einen Teil des gebrannten Ölschiefers durch Gesteinsmehle, insbesondere aus Kalkstein oder Kalkmergel, zu ersetzen, sofern dadurch nicht die erfindungsgemässen Eigenschaften beeinträchtigt werden. Der gebrannte Ölschiefer und die ein oder mehreren Zemente können gemeinsam oder getrennt vermahlen werden z.B. gemäss DIN EN 196-6 nach dem Luftdurchlässigkeitsverfahren nach Blaine, wobei beide Komponenten z.B. in einer geeigneten Bindemittelmischanlage trocken homogen vermischt werden. Das Bindemittel kann zusätzlich ein Zusatzmittel umfassen, um spezielle Eigenschaften des Bindemittels zu verstärken oder erst herauszubilden. Das Zusatzmittel ist eine Mischung aus einem oder mehreren Stoffen und kann u.a. Betonverflüssiger (BV), Fliesmittel (BV), Stabilisator (ST), Erstarrungsverzögerer (VZ), Einpresshilfen (EH), Luftporenbildner (LP), Betondichtungsmittel (DM), Entschäumer (ES), Flugasche (FA), Puzzolane (PL) und/oder Dispersion (DS) umfassen. Mit dem Zusatzmittel können wie erwähnt spezielle Eigenschaften des Bindemittels für spezielle Verwendungszwecke herausgebildet werden. Je nach Verwendungszweck kann folgendes verwendet werden: Erstarrungsverzögerer (Saccharose- und Phosphor-Verbindungen) z.B zum Reduzieren von Rissbildungen oder zum Bewirken einer höheren Druckfestigkeit; Betonverflüssiger (Ligninsulfonate, Melamin- und Naphtalinsulfonate und synthetische Polyvinylverbindungen) z.B. zur starken Verflüssigung des Bindemittels bei gleichem Zement- und Wassergehalt, wodurch sich die Berarbeitung und Pumpfähigkeit verbessern lässt und sich das Material nach Zusammenmischen in jede beliebige Formschalung giessen lässt; Fliessmittel (Calcium- oder Natriumnaphtalinsufonate) mit der gleichen Wirkung wie BV nur mit höherem Wirkungsgrad (geringere Zusatzmenge), weshalb sie auch als HVB (Hochleistungsverflüssiger) bezeichnetwerden; Stabilisierer (Aluminiumsilikate, Bentonit, Alkyl- und Alkylarysulfonate), z.B. zur Bodenstabilisierung während langen Transportzeiten (Entmischung); Einpresshilfen (Aluminiumpulver, Calciumsulfate), um das Absinken von Komponenten zu verhindern; Luftporenbildner (Vinsolharze, Natrium-Ölsäuren, Alkylsulfate, Fettalkohol-Polyglykolethersulfate), z.B. um das Bindemittelfrosttausalzbeständig zu machen; Betondichtungsmittel (Sulfonate-Tenside, mineralische Feinsuspensionen, Alkylbenzolsulfonate), z.B. um das Material wasserdicht zu machen; Entschäumer (Kationische und nichtionische Tenside, Dimethyldistearylammoniumchlorid), z.B. falls zuviel BV, HBV und LP zur Schaumbildung und zuvielen Luftporen führt, kann Entschäumer eingesetzt werden; Flugasche (Verschiedene kugelförmige Flugaschetypen aus Verbrennungsanlagen), z.B. zur Herstellung wasserdichter Schichten und zur Verbesserung der Pumpfähigkeit; Puzzolane (verschiedene Silicastäube, amorphes $SiO_2$ (< 0.1μm)), z.B. zur Erhöhung der Festigkeit und Porösität (Frostbeständigkeit); und schliesslich Dispersion (Acryl- und Metaacrylsäureester-Harze, Butylacrylate), z.B. zur Erhöhung der Festigkeit und Abbindebeschleunigung. Das Bindemittel umfasst 2 bis 90 Gew.% gebrannter Ölschiefer, 2 bis 90 Gew.% der ein oder mehreren Zemente und 0,1 bis 10 Gew.% Zusatzmittel. Gute Resultate wurden ebenfalls mit Ausführungsbeispielen erreicht, bei welchen das Bindemittel 25 bis 50 Gew.% gebrannter Ölschiefer, 50 bis 75 Gew.% der ein oder mehreren Zemente und 0,2 bis 2 Gew.% Zusatzmittel umfasst. Das letztere gehört zu den vorzugsweisen Ausführungsformen. Das Zusatzmittel kann zusammen mit dem Bindemittel z.B. in der erwähnten Bindemittelmischanlage homogen vermischt werden oder zu einem späteren Zeitpunkt dem Bindemittel beigegeben werden.

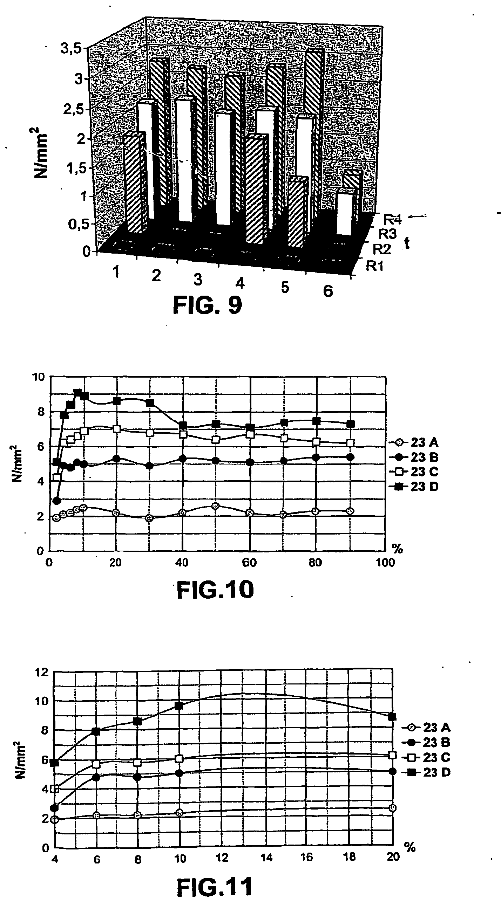

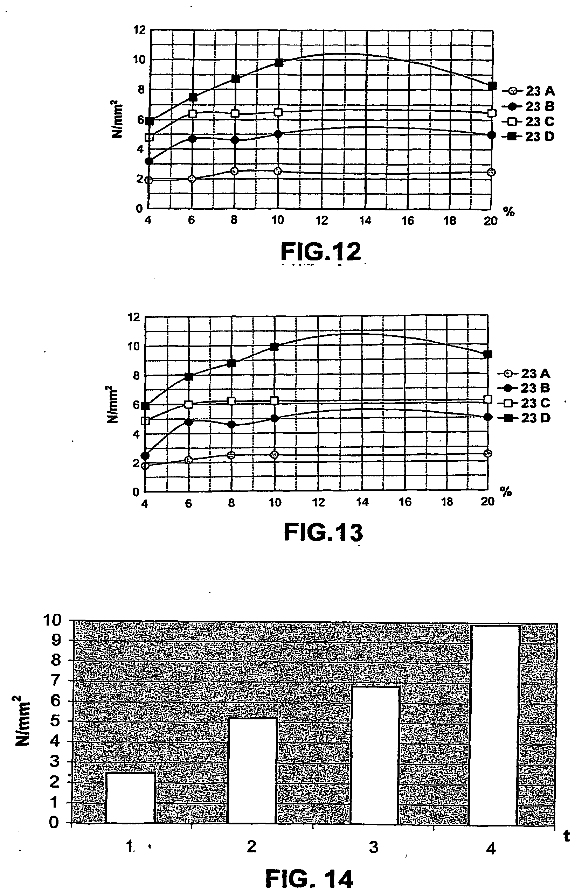

Die Figuren 9 bis 14 geben die gemessene Druckfestigkeit in $N/mm^2$ (Newton/Quadratmilimeter) für verschiedene Bindemittelmischungen an. Gemessen wurde die Druckfestigkeit an einem 15 cm X 15 cm X 15 cm Würfel gebundenen Materials, wobei 97 Gew.% Bodenmaterial mit einer Kieskörnung von 4-8 mm und einem Bindemittelanteil von 8 % verwendet wurde. Figur 9 zeigt die gemessene Druckfestigkeit für verschiedene Bindemittel gemäss dem Stand der Technik. Die X-Achse des Diagramms in Figur 9 mit den Ziffern 1 bis 6 zeigt die verwendeten Bindemittelmischungen 1 bis 6. 1 ist ein Bindemittel bestehend aus 100 Gew.% Portlandzement. Bindemittel 2 bis 4 weisen jeweils 99 Gew.% Portlandzement auf, wobei dem Bindemittel 2 1 Gew.% Verzögerer, Bindemittel 3 1 Gew.% Verflüssiger und Bindemittel 4 1 Gew.% Polymerdispersion beigegeben wurde. Bindemittel 5 umfasst 98 Gew.% Portlandzement und jeweils 1 Gew.% Verflüssiger und Polymerdispersion. Schliesslich besteht Bindemittel 6 aus 100 Gew.% Kalk. Die Z-Achse des Diagramms in Figur 9 zeigt die gemessene Druckfestigkeit in $N/mm^2$. Auf der Y-Achse zeigt R1 die Druckfestigkeit nach 3 Tagen, R2 nach 7 Tagen, R3 nach 14 Tagen und R4 nach 28 Tagen. Die schwarzen Messpunkte geben Messpunkte wieder, welche nicht messbar waren, da die Proben bei der Messung zerbrechen. Im Gegensatz zu Figur 9 zeigen die Figuren 10 bis 14 die Druckfestigkeit bei Bindemitteln mit gebranntem Ölschiefer. Die Y-Achsen der Diagramme geben die Druckfestigkeit in $N/mm^2$ an. Bei den Diagrammen der Figuren 10 bis 13 zeigt die X-Achse den Gew.% Anteil an gebranntem Ölschiefer bei den verwendeten Bindemitteln, wobei das Diagramm in Figur 14, da es nur eine Bindemittelmischung umfasst, auf der X-Achse die Druckfestigkeit nach 3 Tagen 1, die Druckfestigkeit nach 7 Tagen 2, die Druckfestigkeit nach 14 Tagen 3 und die Druckfestigkeit nach 28 Tagen 4. In den Diagrammen der Figuren 10 bis 13 ist die Zeitabhängigkeit der Druckfestigkeit durch 23 A (Druckfestigkeit nach 3 Tagen), 23 B (Druckfestigkeit nach 7 Tagen), 23 C (Druckfestigkeit nach 14 Tagen) und 23 D (Druckfestigkeit nach 28 Tagen) gegeben. Figur 10 umfasst Bindemittelmischungen ohne Zusatzmittel, Figur 11 mit 1 Gew.% Verzögerer, Figur 12 mit 1 Gew.% Verflüssiger und Figur 13 mit 1 Gew.% Polymerdispersion. Der Rest ist jeweils entsprechend den Angaben der Diagramme ein Bindemittelgemisch aus gebranntem Ölschiefer (Gew.% Angaben auf X-Achse) und Portlandzement. In Figur 14 wurde ein Bindemittelgemisch aus 78 Gew.% Portlandzement, 20 Gew.% Ölschiefer, 1 Gew.% Verflüssiger und 1 Gew.% Polymerdispersion verwendet. Vergleicht man nun die erreichte Druckfestigkeit der Diagramme der Figuren 10 bis 14 (vorliegende Erfindung) mit den Druckfestigkeiten des Diagramms der Figur 9 (Stand der Technik), so übersteigt die gemessene Druckfestigkeit bei allen Bindemitteln und in allen Messpunkten die Druckfestigkeit, die mit Bindemitteln des Standes der Technik erreicht werden können, mindestend um das Doppelte. Markant kommt dies insbesondere in den Messreihen nach 3 Tagen (R1, 23A) und nach 28 Tagen (R4, 23D) zum Ausdruck. Mit Bindemitteln des Standes der Technik wurde nach 3 Tagen (R1, 23A) bei keiner Probe (Kieskörnung des Bodenmaterials 4 bis 8 mm) eine messbare Druckfestigkeit gemessen, wobei bei den erfindungsgemässen Proben überall bereits eine Druckfestigkeit von um die 2 N/mm$^2$ und mehr gemessen wurde. Bei den Messreihen nach 28 Tagen (R4, 23D) wurde mit allen vorzugsweise angegebenen Bindemitteln der vorliegenden Erfindung eine Druckfestigkeit von 8 bis 10 N/mm$^2$ gemessen, während bei den Bindemitteln des Standes der Technik in keinem einzigen Fall 3.1 N/mm$^2$ überschritten wurde. Damit werden in diesen Diagrammen leicht einige der Vorteile der Erfindung ersichtlich. Es zeigt sich, dass besonders bei Bodenmaterial mit nur sehr kleinen Kontaktflächen die Bindemittel den Bindemitteln des Standes der Technik weit überlegen sind. Damit können mit der vorliegenden Erfindung für bestimmte Anwendungsgebiete speziell benötigte Eigenschaften der Böden oder Trennschichten (Wasserdurchlässigkeit etc.) durch die Verwendung eines Bindemittels erst erreicht werden. Betrachtet man im übrigen den Plastizitätsindex der Böden oder Trennschichten so wird in allen USCS-Klassen (Figur 5) betreffend der Stabilisierung von Bodenmaterial (siehe SNV 670010) ein Plastizitätsindex von 98 % und mehr erreicht. Wie in SN 640500 a angegeben wird, ist dies mit den Methoden des Standes der Technik mit Weisskalk als Bindemittel, herkömmlichen hydraulischen Bindemitteln oder bituminösen Bindemitteln keineswegs der Fall. Insbesondere muss im Stand der Technik bei höherem Plastizitätsindex (i.N.ungefähr >8 %) ein Ortsmischverfahren verwendet werden.

Es ist wichtig darauf hinzuweisen, dass einer der Nachteile des Standes der Technik, auf welchen an den verschiedensten Orten verwiesen wird, ist, dass organische Bestandteile z.B. in den Böden die Wirkung der herkömmlichen Bindemittel stark beinträchtigen kann (siehe u.a. Schweizerische Norm SN 640500 a). Es ist jedoch so, dass Humose und sonstige organische Bestandteile in natürlichen Vorkommen (Sand, Kies) vorhanden sein können. Organische Stoffe können aber auch durch Verschmutzung (Umweltverschmutzung) in das zu bindende Baumaterial gelangt sein. Insbesondere kann das Binden von organischen und anorganischen Giftsstoffen eine speziell benötigte Eigenschaft des Bindemittels sein. Diese organischen Stoffe stören in fein verteilter Form z.B. das Erhärten und Binden von herkömmlichen Bindemitteln, im speziellen auch bei Beton oder Mörtel. In körniger Form der Verteilung, wie z.B. braunkohleartige Teile, verursachen die organischen Verschmutzungen Verfärbungen und/oder Absprengungen an der Oberfläche des gebundenen Baumaterials. Einen Hinweis auf das Vorhandensein von fein verteilten störenden organischen Stoffen gibt z.B. die Untersuchung des Zuschlags mit Natronlauge, bekannt als Natronlaugentest. Im Normalfall ist bei Bindemitteln des Standes der Technik beim betreffenden Zuschlag eine Eignungsprüfung mit Beton nach DIN 1045 und DIN 1048 durchzuführen. Der Stand der Technik wird meist darauf hingewiesen, dass der Gehalt von 0.5 Gew.% an kohlenartigen oder anderen quellenden Stoffen nicht überschritten werden darf, falls z.B. für sichtbare Teile, Wände etc. nicht noch schärfere Anforderungen notwendig sind. Im Gegensatz zum Stand der Technik ist das Bindungsmittel auch bei Vorhandensein von organischen Stoffen im Baumaterial als Bindemittel geeignet und ändert seine Eigenschaften dadurch nicht. Gerade bei Baumaterial, welches, wie es heute häufig vorkommt, neben Verschmutzung mit organischen Stoffen auch mit giftigen Stoffe kontaminiert ist, kann das Baumaterial zusammen mit den giftigen Stoffen durch das Bindemittel gut gebunden werden. Das Anwendungsspektrum allein unter diesem Aspekt ist im Bausektor und Umweltschutz kaum zu unterschätzen.

Im Zusammenhang mit organischen Stoffen sei hier erwähnt, dass sich das Bindemittel auch eignet, um z.B. mit Zusatz von Farbstoffen auf organischer Basis, eingefärbt zu werden. Insbesondere eignet sich das Bindemittel durch seine organische Zusammensetzung auch zur Verwendung in Räumen mit erhöhten Anforderungen an Giftigkeit etc. der verwendeten Baumaterialien, so z.B. für geschlossene Räume, Aufenthaltsräume von Menschen und im speziellen Kindern, Lagerräumen von Nahrungsmitteln etc., Räumen zur Aufzucht von Pflanzen, wie Treibhäuser, und Tieren. Bei tiefen Brenntemperaturen des Ölschiefers weist das Bindemittel natürlicherweise eine rötliche Färbung auf, bei höheren Brenntemperaturen (>~300°C) ist das Bindemittel wegen dem gebrannten Ölschiefer natürlicherweise grau. Andere Farben können wie erwähnt durch Beimischen von diversen Färbemitteln erhalten werden.

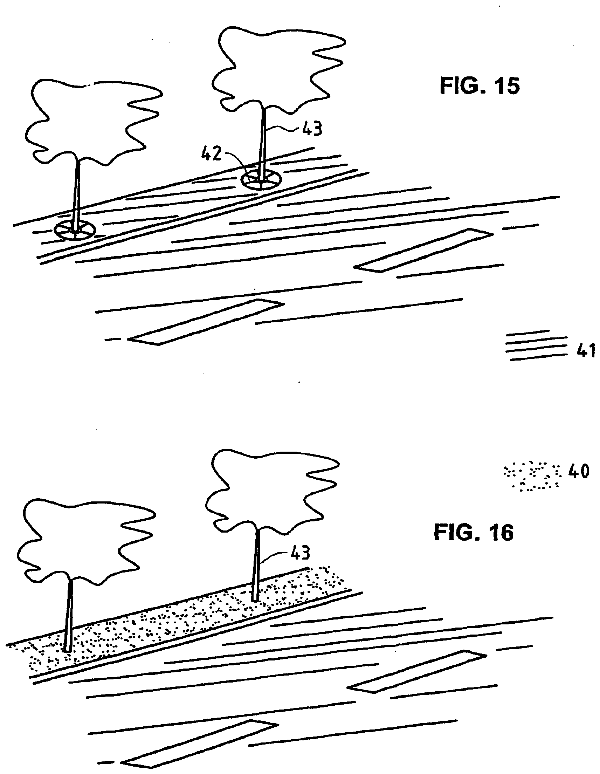

In einer erweiterten Anwendung wird zu binden des Material mit einem Bindemittel stabilisiert, wobei vorgefertigte Bauund/oder Formelemente mittels vordefinierten Schalungen und/oder Formmasken hergestellt werden. Die vorgefertigten Bau- und/oder Formelemente beispielsweise zentral hergestellt werden können und dann in den veschiedensten Bereichen des Bau- und Gartenbaus eingesetzt werden. Auch ist klar, dass sich solche vorgefertigte Bau- und/oder Formelemente hervorragend dazu eignen, industriell hergestellt zu werden und Abnehmer aus den verschiedensten Bereichen verkauft zu werden, wie z.B. für Kellerbau, Trainagen, Treibhäuser, Arbeitsflächen, Grünflächen etc. Es soll noch einmal darauf hingewiesen werden, dass sowohl bei der Herstellung vorgefertigte Bau- und/oder Formelemente, als auch bei anderer Verwendung des Bindemittels die Stabilisierung des zu bindenden Materials beispielsweise durch Stampfen, Schalen, Walzen, Vibrieren und/oder Auffüllen des Materials erreicht oder verbessert werden kann. Figur 16 zeigt ein Beispiel einer Anwendung einer Bodenschicht, die sowohl mittels vorgefertigter Formelemente als auch durch Stabilisieren vor Ort hergestellt werden kann. Der Bodenbelag 40 kann bis an die Bäume 43 oder andere Pflanzen planniert werden, da er wasserdurchlässig ist. Figur 15 zeigt dagegen eine gleiche Plannierung 41 nach dem Stand der Technik, bei welcher Baumroste 42 dazu führen, dass die Pflanzen das notwendige Wasser erhalten. Als andere Beispiele und Anwendungen können Fundations- und Tragschichten im Strassenbau (Dabei sind alle in der Norm SN 640 302 a aufgeführten Schichten beinhaltet), lastenverteilende Schichten auf setzungsempfindlichen Böden, Schutzschichten von witterungsempfindlichen Oberflächen, Untergrundverbesserungen, Pistenbau, Verbesserungen der Stabiliät von Dämmen, Bodenbefestigungen, Ufer-, Deich- und Gehwegbefestigungen, wasserduchlässige Flächengebilde im Landschaftsbau, Herstellung von Strassen, Wegen und Parkplätzen, Haltestellen und Funktionsflächen.

Obwohl die Erfindung detailliert beschrieben wurde, ist die vorangehende Beschreibung in allen Aspekten illustrativ und nicht restriktiv.

**Liste der Bezugszeichen**

| 1 | Land |
|---|---|
| 2 | Gut durchlüftetes Flachmeer |
| 3 | Meeresbecken mit Ölschieferablagerungen |
| 20 | A Ton |
| | B Silt |
| | C Sand |
| | D Kies |
| | E Steine |
| | X Korndurchmesser [mm], Sieböffnung [mm] |
| | Y Durchgang [Masse-%] |
| 21 | Ortsmischverfahren |
| 22 | Orts- oder Zentralmischverfahren |

| 23 | A Gemessene Druckfestigkeit nach 3 Tagen |
|---|---|
| | B Gemessene Druckfestigkeit nach 7 Tagen |
| | C Gemessene Druckfestigkeit nach 14 Tagen |
| | D Gemessene Druckfestigkeit nach 28 Tagen |
| R1 | Gemessene Druckfestigkeit nach 3 Tagen |
| R2 | Gemessene Druckfestigkeit nach 7 Tagen |
| R3 | Gemessene Druckfestigkeit nach 14 Tagen |
| R4 | Gemessene Druckfestigkeit nach 28 Tagen |
| 40 | Wasserdurchlässige Bodenschicht |
| 41 | Wasserundurchlässig planierter Boden und/oder Strasse Baumrost |
| 42 | Wasserdurchlässiger |
| 43 | Baum |

**Patentansprüche**

1.  Verfahren zur Herstellung von wasserdurchlässigen Böden oder wasserdurchlässigen Trennschichten, wobei zu bindendes Material zusammen mit dem Bindemittel den Boden oder die Trennschicht bildet, **dadurch gekennzeichnet,**
    **dass** das zu bindende Material bestimmbare diskrete Korngrössen im Bereich 2-63mm (Kies) aufweist, dass das Bindemittel gebrannten Ölschiefer umfasst, wobei der gebrannte Ölschiefer 2 bis 90 Gew. % des Bindemittels beträgt,
    **dass** das Bindemittel ein oder mehrere Zemente umfasst, wobei die ein oder mehreren Zemente 2 bis 90 Gew. % des Bindemittels betragen und wobei die ein oder mehreren Zemente mindestens teilweise Zemente nach DIN 1164 umfassen,
    **dass** das Bindemittel ein Zusatzmittel umfasst, wobei das Zusatzmittel 0.1 bis 10 Gew. % des Bindemittels beträgt,
    **dass** die ein oder mehreren Zemente eine Mahlfeinheit von 2700 bis 4500 cm2/g aufweisen und dass der gebrannte Ölschiefer eine Mahlfeinheit von u□ber4000 cm2/g aufweist.

2.  Verfahren zur Herstellung von wasserdurchlässigen Böden, oder Trennschichten nach Anspruch 1, **dadurch gekennzeichnet, dass** das Zusatzmittel eine Mischung aus einem oder mehreren der Stoffe Betonverflüssiger (BV), Fliesmittel (BV), Stabilisierer (ST), Erstarrungsverzögerer (VZ), Einpresshilfen (EH), Luftporenbildner (LP), Betondichtungsmittel (DM), Entschäumer (ES), Flugasche (FA), Puzzolane (PL) und/oder Dispersionen (OS) umfasst.

3.  Verfahren zur Herstellung von wasserdurchlässigen Böden, oder Trennschichten nach einem der Ansprüche 1 bis 2, **dadurch gekennzeichnet, dass** der gebrannte Ölschiefer 25 bis 50 Gew.% des Bindemittels beträgt.

4.  Verfahren zur Herstellung von wasserdurchlässigen Böden, oder Trennschichten nach einem der Ansprüche 1 bis 3, **dadurch gekennzeichnet, dass** die ein oder mehreren Zemente 50 bis 75 Gew. % des Bindemittels betragen.

5. Verfahren zur Herstellung von wasserdurchlässigen Böden, oder Trennschichten nach einem der Ansprüche 1 bis 4, **dadurch gekennzeichnet, dass** das Zusatzmittel 0,2 bis 2 Gew.% des Bindemittels beträgt.

6. Verfahren zur Herstellung von wasserdurchlässigen Böden, oder Trennschichten nach einem der Ansprüche 1 bis 5, **dadurch gekennzeichnet, dass** die ein oder mehreren Zemente Portlandzement und/oder Trasszement und/oder Lavazement und/oder Schnellzement und/oder Tonerdenzement und/oder Eisenportlandzement und/oder Hochofenzement und/oder Trasshochofenzement umfassen.

7. Verfahren zur Herstellung von wasserdurchlässigen Böden, oder Trennschichten nach einem der Ansprüche 1 bis 6, **dadurch gekennzeichnet, dass** das Bindemittel zusätzlich latent-hydraulische Stoffe umfasst, wobei der Anteil an gebranntem Ölschiefer teilweise durch diese latent hydraulischen Stoffe ersetzt wird.

8. Verfahren zur Herstellung von wasserdurchlässigen Böden, oder Trennschichten nach einem der Ansprüche 1 bis 7, **dadurch gekennzeichnet, dass** das Bindemittel zusätzlich Kalkstein und/oder Kalkmergel und/oder andere Gesteinsmehle umfasst, wobei der Anteil an gebranntem Ölschiefer teilweise durch diese Gesteinsmehle ersetzt wird.

9. Verfahren zur Herstellung von wasserdurchlässigen Böden, oder Trennschichten nach einem der Ansprüche 1 bis 8, **dadurch gekennzeichnet, dass** der gebrannten Ölschiefer mindestens teilweise gebrannter Ölschiefer nach DIN 1164 umfasst.

10. Verfahren zur Herstellung von wasserdurchlässigen Böden, oder Trennschichten nach einem der Ansprüche 1 bis 9, **dadurch gekennzeichnet, dass** der gebrannte Ölschiefer und die ein oder mehreren Zemente getrennt vermahlen werden auf eine Mahlfeinheit gemäss DIN EN 196-6 nach dem Luftdurchlässigkeitsverfahren (Blaine) und beide Komponenten zusammen mit dem Zusatzmittel in einer entsprechenden Bindemittelmischanlage trocken homogen miteinander vermischt werden.

**Claims**

1. A method for producing water-permeable soils or water-permeable parting layers, wherein the material to be bound together with the binder forms the soil or the parting layer, **characterized in that** the material to be bound has determinable discrete grain sizes in the range of from 2 to 63 mm (gravel), **that** the binder comprises burnt oil shale, wherein the burnt oil shale amounts to 2 to 90% by weight of the binder, **that** the binder comprises one or more cements, wherein the one or more cements amount to 2 to 90% by weight of the binder, and wherein the one or more cements comprise at least partially cements according to DIN 1164, **that** the binder comprises an additive, wherein the additive amounts to 0.1 to 10% by weight of the binder, **that** the one or more cements have a grinding fineness of 2700 to 4500 $cm^2$/g, and **that** the burnt oil shale has a grinding fineness greater than 4000 $cm^2$/g.

2. The method for producing water-permeable soils or parting layers according to claim 1, **characterized in that** the additive comprises a mixture of one or more of the substances concrete plasticizers (BV), plasticizers (BV), stabilizers (ST), hardening retarders (VZ), pressing aids (EH), air-entraining agents (LP), concrete sealants (DM), defoamers(ES), fly ash (FA), puzzolanes (PL) and/or dispersions (DS).

3. The method for producing water-permeable soils or parting layers according to any one of the claims 1 to 2, **characterized in that** the burnt oil shale amounts to 25 to 50% by weight of the binder.

4. The method for producing water-permeable soils or parting layers according to any one of the claims 1 to 3, **characterized in that** the one or more cements amount to 50 to 75% by weight of the binder.

5. The method for producing water-permeable soils or parting layers according to any one of the claims 1 to 4, **characterized in that** the additive amounts to 0.2 to 2% by weight of the binder.

6. The method for producing water-permeable soils or parting layers according to any one of the claims 1 to 5, **characterized in that** the one or more cements comprise Portland cement and/or trass cement and/or lava cement and/or quick cement and/or alumina cement and/or iron Portland cement and/or blast-furnace cement and/or trass blast-furnace cement.

7. The method for producing water-permeable soils or parting layers according to any one of the claims 1 to 6, **characterized in that** the binder additionally comprises latent hydraulic substances, wherein the percentage of burnt oil shale is partially replaced by these latent hydraulic substances.

8. The method for producing water-permeable soils or parting layers according to any one of the claims 1 to 7, **characterized in that** the binder additionally comprises limestone and/or lime marl and/or other rock flours, wherein the percentage of burnt oil shale is partially replaced by these rock flours.

9. The method for producing water permeable soil or parting layers according to any one of the claims 1 to 8, **characterized in that** the burnt oil shale comprises at least partially burnt oil shale according to DIN 1164.

10. The method for producing water-permeable soils or parting layers according to any one of the claims 1 to 9, **characterized in that** the burnt oil shale and the one or more cements are ground separately to a grinding fineness according to DIN EN 196-6 based on the method of Blaine air permeability, and both components together with the additive are mixed dry and homogenously in a suitable binder mixing plant.

**Revendications**

1. Procédé de fabrication de sols ou de couches séparative perméables à l'eau, où un matériau à lier associé à un liant forme le sol ou la couche séparative, **caractérisé en ce que**
   le matériau à lier présente des granulométries discrètes déterminables dans le domaine 2-63 mm (gravier),
   le liant comprend des schistes bitumeux brûlés, où le schiste bitumeux brûlé représente 2 à 90 % en poids du liant,
   le liant comprend un ou plusieurs ciments, où le ou les ciments représentent 2 à 90 % en poids du liant, et où le ou les ciments comprennent au moins partiellement des ciments selon la norme DIN 1164.
   le liant comprend un additif, où l'additif représente 0,1 à 10 % en poids du liant,
   le ou les ciments présentent une finesse de broyage de 2700 à 4500 cm$^2$/g, et
   le schiste bitumeux brûlé présente une finesse de broyage supérieure à 4000 cm$^2$/g.

2. Procédé de fabrication de sols ou de couches séparatives perméables à l'eau selon la revendication 1, **caractérisé en ce que** l'additif comprend un mélange d'une ou plusieurs subtances parmi les superplastifiants (BV), les fluidifiants (BV), les stabilisants (ST), les retardateurs (VZ), les agents d'injection (EH), les entraîneurs d'air (LP), les produits d'étanchéité pour bétons (DM), les angents anti-mousse (ES), les cendres volantes (FA), les pouzzolanes (PL) et/ou les dispersions (DS).

3. Procédé de fabrication de sols ou de couches séparatives perméables à l'eau selon une des revendications 1 à 2, **caractérisé en ce que** le schiste bitumeux brûlé représente 25 à 50 % en poids du liant.

4. Procédé de fabrication de sols ou de couches séparatives perméables à l'eau selon une des revendications 1 à 3, **caractérisé en ce que** le ou les ciments représentent 50 à 75 % en poids du liant.

5. Procédé de fabrication de sols ou de couches séparatives perméables à l'eau selon une des revendications 1 à 4, **caractérisé en ce que** l'additif représente 0,2 à 2 % en poids du liant.

6. Procédé de fabrication de sols ou de couches séparatives perméables à l'eau selon une des revendications 1 à 5, **caractérisé en ce que** le ou les ciments comprennent du ciment Portland et/ou du ciment Trass et/ou du ciment volcanique et/ou du ciment à prise rapide et/ou du ciment alumineux et/ou du ciment de haut fourneau et/ou du ciment de laitier et/ou du ciment Trass de haut fourneau.

7. Procédé de fabrication de sols ou de couches séparatives perméables à l'eau selon une des revendications 1 à 6, **caractérisé en ce que** le liant comprend en plus des substances hydrauliques latentes, où la teneur en schiste bitumeux brûlé est partiellement remplacée par ces substances hydrauliques latentes.

8. Procédé de fabrication de sols ou de couches séparatives perméables à l'eau selon une des revendications 1 à 7, **caractérisé en ce que** le liant comprend en plus de la craie et/ou du calcaire marneux et/ou d'autres poudres de roches micronisées, où la teneur en schiste bitumeux brûlé est partiellement remplacée par ces poudres de roches micronisées.

9. Procédé de fabrication de sols ou de couches séparatives perméables à l'eau selon une des revendications 1 à 8, **caractérisé en ce que** le schiste bitumeux brûlé comprend au moins partiellement du schiste bitumeux brûlé selon la norme DIN 1164.

10. Procédé de fabrication de sols ou de couches séparatives perméables à l'eau selon une des revendications 1 à 9, **caractérisé en ce que** le schiste bitumeux brûlé et le ou les ciments sont moulus séparément jusqu'à une finesse de broyage selon la norme DIN EN 196-6 selon le procédé de perméabilité à l'air (Blaine), et les deux composants sont mélangés à l'additif à sec et de façon homogène dans un dispositif correspondant de mélange de liant.

FIG.1

**FIG. 2**

**FIG. 3**

**FIG. 4**

**FIG. 5**

**FIG. 6**

FIG. 7

FIG. 8

**FIG. 9**

**FIG.10**

**FIG.11**

**FIG.12**

**FIG.13**

**FIG. 14**

EP 1 358 299 B2

FIG. 15

FIG. 16

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 373647 A
- DE 2243389
- US 3844930 A
- DE 2728204
- DE 2728455
- DE 19603805
- DE 198753196
- DE 1816704